# EUROPEAN PATENT APPLICATION

(11) **EP 4 386 543 A1**
(43) Date of publication of application: **19.06.2024**
(21) Application number: 22214131.9
(22) Date of filing: 16.12.2022
(51) Int. Cl.: G06F 9/445, G06N 3/08, G06N 5/01, G06N 20/00

(54) **INDIVIDUALIZED MACHINE LEARNING ALGORITHMS**

(71) Applicant: Harman Becker Automotive Systems GmbH, 76307 Karlsbad (DE)
(72) Inventor: von Türckheim, Friedrich, 22587 Hamburg (DE); Lamani, Gleni, 81547 Munich (DE); Markovi , Milo, 80636 Munich (DE)
(74) Representative: Kraus & Lederer PartGmbB

(57) **Abstract**

Techniques for determining, individualizing, or personalizing a machine-learning (ML) algorithm are disclosed. The determining, individualizing, or personalizing of the ML algorithm may be executed by either a system comprising a server and a client/user device or a standalone computing device by performing a method. The method comprises obtaining, from a user, one or more configuration requirements associated with the ML algorithm. The method further comprises determining the ML algorithm based on the one or more configuration requirements.

## Description

### TECHNICAL FIELD

Various examples of the disclosure generally pertain to machine learning (ML). Various examples of the disclosure specifically pertain to determining one or more ML algorithms based on one or more configuration requirements associated with the one or more ML algorithms obtained from a specific user.

### BACKGROUND ART

Machine learning (ML), in particular, deep learning (DL) such as deep neural networks (DNNs) comes with challenges with respect to computational resources and training data requirements. For example, some of the breakthroughs in DNNs only became possible through the availability of massive computing systems or through careful co-design of software and hardware.

Nowadays, Internet of Things (IoT) gives rise to a huge amount of data. IoT nodes equipped with smart sensors can immediately extract meaningful knowledge from the data through ML technologies. The promising prospect of wide-range applications puts forward demands on the ubiquitous deployment of ML algorithms under various contexts. As a result, deploying and executing ML algorithms on mobile or embedded platforms is becoming a common requirement.

Nevertheless, a typical ML algorithm, in particular DL algorithm, can easily exhaust an embedded or mobile device owing to a large amount of multiply-accumulate operation and memory access operations. For example, it is a challenging task to create ML algorithms and deploy them on resource-limited computing environments (or platforms) for real-time signal processing.

Further, different end users may have different personalized requirements to an identical ML algorithm.

### SUMMARY

Therefore, a need exists for advanced techniques for improving ML algorithms. Specifically, a need exists for bridging the gap between ML and different computing environments. A need exists for an appropriate configuration of one or more ML algorithms to meet the needs of a specific user.

This need is met by the features of the independent claims. The features of the dependent claims define embodiments.

A computer-implemented method for determining, individualizing, or personalizing an ML algorithm is provided. The method comprises obtaining, from a user, one or more configuration requirements associated with the ML algorithm. The method further comprises determining the ML algorithm based on the one or more configuration requirements.

A computing device comprising a processor and a memory is provided. Upon loading and executing program code from the memory, the processor is configured to perform a method for determining, individualizing, or personalizing an ML algorithm. The method comprises obtaining, from a user, one or more configuration requirements associated with the ML algorithm. The method further comprises determining the ML algorithm based on the one or more configuration requirements.

A system comprising a user interface and a computing device is provided. A user inputs, via the user interface, one or more configuration requirements associated with an ML algorithm. The computing device comprises a processor and a memory. Upon loading and executing program code from the memory, the processor is configured to perform a method for determining, individualizing, or personalizing the ML algorithm. The method comprises obtaining, from a user, one or more configuration requirements associated with the ML algorithm. The method further comprises determining the ML algorithm based on the one or more configuration requirements.

A computer program product or a computer program or a computer-readable storage medium including program code is provided. The program code can be executed by at least one processor. Executing the program code causes the at least one processor to perform a method for determining, individualizing, or personalizing an ML algorithm. The method comprises obtaining, from a user, one or more configuration requirements associated with the ML algorithm. The method further comprises determining the ML algorithm based on the one or more configuration requirements.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system according to various examples.
FIG. 2 is a flowchart of a method according to various examples.
FIG. 3 is an exemplary workflow according to various examples.
FIG. 4 is a block diagram of a computing device according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques for determining one or more ML algorithms based on one or more configuration requirements associated with the one or more ML algorithms obtained from a specific user are described. The one or more ML algorithms may be any of the available ML algorithms for processing various data such as audio data, video data, graphics, sensor data, text data, and so on. The one or more ML algorithms may be configured to perform prediction, classification, clustering, filtering, segmentation, controlling, etc. The one or more ML algorithms may be trained using supervised learning, unsupervised learning, semi-supervised learning, or reinforcement learning.

According to this disclosure, the one or more configuration requirements associated with the one or more ML algorithms may comprise a target use case, a configuration of a computing platform for executing the ML algorithm, a storage path associated with training data, or a minimum target performance of the ML algorithm.

For example, the target use case may comprise various data-driven applications such as modeling of audio, video, sensory, or any other data set. These data-driven applications may comprise classification, clustering, or editing/improving data samples, e.g., music genre classification, audio/acoustic content enhancement including such as speech enhancement and noise cancelation, natural language processing, virtual assistants, visual recognition, fraud detection, automatic machine translation, automatic handwriting generation and so on.

According to this disclosure, a computing platform is an environment in which a piece of software is executed. It may be the hardware or the operating system (OS), even a web browser and associated application programming interfaces, or other underlying software, as long as the program code is executed with it. Computing platforms have different abstraction levels, including a computer architecture, an OS, or runtime libraries. A computing platform is the stage on which computer programs can run. A platform can be seen both as a constraint on the software development process, in that different platforms provide different functionality and restrictions; and as an assistant to the development process, in that they provide low-level functionality ready-made. For example, an OS may be a platform that abstracts the underlying differences in hardware and provides a generic command for saving files or accessing the network. Different computing platforms may have different computing resources such as one or more central processing units (CPUs), memories, and/or one or more graphics processing units (GPUs), etc.

According to this disclosure, one or more ML algorithm is determined based on one or more configuration requirements associated with the one or more ML algorithm, and the one or more configuration requirements is obtained from a user.

Accordingly, the one or more determined ML algorithm can be adjusted/optimized for a specific/target computing platform. For example, the one or more ML algorithm, e.g., neural networks, may be tailored for a given use case running on a resource-limited computing platform such that the size and/or processing requirements of the neural networks may be optimized/adjusted to make them affordable in terms of million instructions per second (MIPS) and memory consumption. Additionally or optionally, the one or more determined ML algorithm can be trained/re-trained using training data collected by the user and thereby the one or more determined ML algorithm can be improved to meet specific needs of the user.

Generally, the techniques disclosed herein can be implemented using a system with a client-server architecture or using a standalone computing device such as a server or a personal computer.

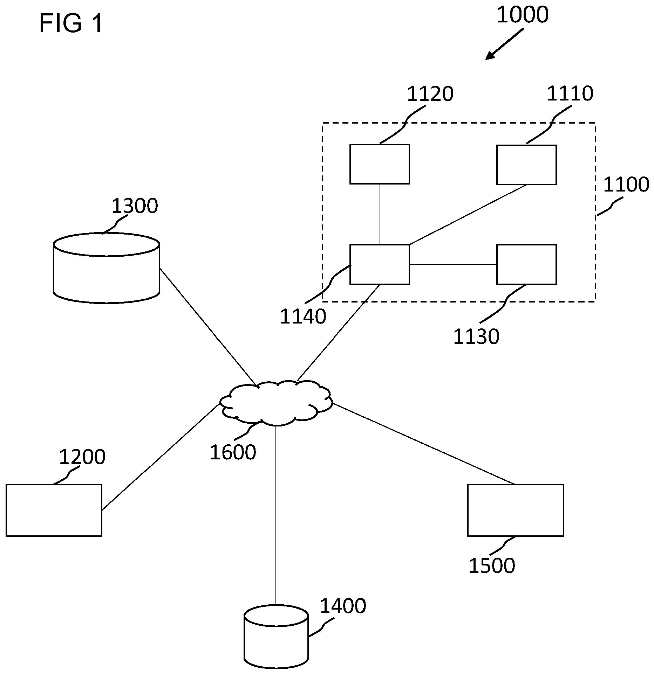

FIG. 1 schematically illustrates details with respect to a system 1000 according to various examples. The system 1000 includes a server 1200. The server can obtain, from a user, one or more configuration requirements associated with a ML algorithm and determine the ML algorithm based on the one or more configuration requirements.

For example, the server 1200 may be a cloud server or a private server of a company or an institution. The server 1200 may be located in a local network or the Internet 1600.

Also illustrated in FIG. 1 are client/user devices 1110, 1120, 1130, and 1500. The client/user devices 1110, 1120, 1130, and 1500 may be mobile phones, personal computers, IoT devices, or embedded computing devices. For example, the embedded computing device may be embedded in a car or a machine in a facility. The server 1200 may obtain, from a user, the one or more configuration requirements via any of the user devices 1110, 1120, 1130, and 1500. Additionally or optionally, the one or more determined ML algorithm may be deployed in any one or more of the user devices 1110, 1120, 1130, and 1500.

As an example, the user devices 1110, 1120, and 1130 may be located in a local network 1100 and respectively connected to the Internet 1600 via a router (or a local server) 1140.

The local network 1100 may be within a residence, school, laboratory, university campus, or office building. The user device 1500 may connect to the Internet 1600 via a wireless communication network (not shown in FIG. 1), e.g., a 5G network. The user device 1500 may be an IoT device.

Optionally or additionally, the system 1000 may comprise a database 1300. The database 1300 may store data for training various ML algorithms or data to be processed by trained ML algorithms, e.g., audio data, video data, graphics, sensor data, text data, and so on. The data stored in the database 1300 may be sorted following an agreed convention and grouped based on applications. The system 1000 may comprise a code database 1400. The code database 1400 may store program codes of various ML algorithms available in the art. The code database 1400 may also store program codes of different layers/operations of neural networks available in the art.

According to various examples, the server 1200, the database 1300, and the code database 1400 may be located in the same local network, in a cloud computing system, or in an edge computing system.

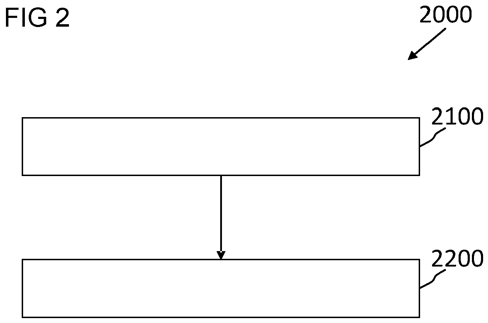

FIG. 2 is a flowchart of a method 2000 according to various examples. For example, the method according to FIG. 2 may be executed by the server 1200 of FIG. 1, e.g., by a processor of the server 1200 upon loading program code from a memory. The method 2000 may be executed by any of the user devices 1110, 1120, 1130, and 1500 of FIG. 1, e.g., by a respective processor of a respective user device upon loading program code from a memory of the respective user device. The method 2000 may be executed by the server 1200 together with any one of the user devices 1110, 1120, 1130, and 1500. For example, the user may input/send, via any one of the user devices 1110, 1120, 1130, and 1500, one or more configuration requirements associated with one or more ML algorithms to the server 1200. The server 1200 may determine the one or more ML algorithms based on the one or more configuration requirements. It would also be possible that the method 2000 is at least partially executed by a separate compute unit, e.g., at a server backend.

FIG. 2 illustrates aspects with respect to determining, individualizing, or personalizing an ML algorithm. The ML algorithm is determined, individualized, or personalized based on one or more configuration requirements associated with the ML algorithm. The configuration requirements are obtained from a user. Details of the method 2000 are described below.

Block 2100: obtaining, from a user, one or more configuration requirements associated with an ML algorithm.

For example, the one or more configuration requirements associated with the ML algorithm may be input by the user via a standalone application or a web-based graphical user interface. The standalone application or the web-based graphical user interface may be deployed on any one of the user devices 1110, 1120, 1130, and 1500 of FIG. 1.

Block 2200: determining the ML algorithm based on the one or more configuration requirements.

According to various examples, said determining of the ML algorithm may comprise selecting, among a plurality of predefined ML algorithms, the ML algorithm. Additionally or optionally, the selected ML algorithm may be re-trained using training data collected by the user. Alternatively or optionally, said determining of the ML algorithm may comprise selecting, among a plurality of trained ML algorithms, the ML algorithm.

For example, the server 1200 may retrieve the ML algorithm from the code database 1400 based on the one or more configuration requirements. The server 1200 may select, among predefined searching strategies, a searching strategy based on the one or more configuration requirements and retrieve the ML algorithm using the selected searching strategy.

According to various examples, each of the plurality of predefined ML algorithms may comprise ML model metadata and the ML algorithm may be determined based on the one or more configuration requirements and the ML model metadata.

According various examples, the ML algorithm may be manually determined/selected by a user or automatically by one or more optimization algorithm that proposes an appropriate ML algorithm for a given use case.

Additionally or optionally, the one or more configuration requirements may comprise a target use case, and said determining of the ML algorithm may comprise selecting, among a plurality of predefined ML algorithms, the ML algorithm based on the target use case.

For example, the target use case may comprise music genre classification. The server 1200 may use Boolean operators - AND, OR and NOT - to create a searching strategy and then retrieve the ML algorithm in the code database 1400. If more than one ML algorithms are retrieved, the user may manually select one. Alternatively, the user may revise the one or more configuration requirements to trigger a new retrieval at the server 1200.

Additionally or optionally, the one or more configuration requirements may further comprise a configuration of a computing platform for executing the ML algorithm. The method 2000 may further comprise determining an architecture of the ML algorithm based on the configuration of the computing platform and said selecting of the ML algorithm is further based on the architecture of the ML algorithm.

In general, the architecture of the ML algorithm may comprise an input dimension, an output dimension, a number of hidden layers, a total number of parameters including hyper-parameters and trainable parameters, input neurons, output neurons, etc.

For example, the user device 1500 is the computing platform for executing the ML algorithm. The user device 1500 may be a computing device of a car, which comprises a CPU with a clock speed of 3.2 Gigahertz (GHz), a GPU with a video memory of 10 Gigabytes (GB), and a random-access memory (RAM) of 8 GB. The capacity of the user device 1500 is a constraint for determining the architecture of the ML algorithm. The architecture of the ML algorithm may be determined such that the user device can execute the ML algorithm, e.g., in terms of MIPS and memory consumption.

According to various examples, the code database 1400 may store different versions of the ML algorithm based on different configurations of different computing platforms. Each version of the ML algorithm may be mapped to one or more of the different configurations of the computing platform.

For example, the different versions of the ML algorithm may be predefined using techniques in the art, e.g., those as presented in the following pieces of non-patent literature:
- Chen, Chunlei, et al. "Deep learning on computational-resource-limited platforms: a survey." Mobile Information Systems 2020 (2020).
- Schorn, Christoph, et al. "Automated design of error-resilient and hardware-efficient deep neural networks." Neural Computing and Applications 32.24 (2020): 18327-18345.
- Han, Song, et al. "Design automation for efficient deep learning computing." arXiv preprint arXiv: 1904.10616 (2019).

Additionally or optionally, the one or more configuration requirements may further comprise a storage path associated with training data. The method 2000 may further comprise obtaining the training data based on the storage path, and training the ML algorithm based on the training data.

According to various examples, the ML algorithm determined at block 2200 may be further trained using training data indicated in the one or more configuration requirements. For example, the parameters of the ML algorithm can be tailored to meet the user's specific needs or requirements based on the training data indicated in the one or more configuration requirements. Accordingly, the performance of the ML algorithm may be improved for a specific user.

Additionally or optionally, the method 2000 may further comprise determining, based on the training data, one or more training settings for said training of the ML algorithm, and said training of the ML algorithm is further based on the one or more training settings. The performance of the ML algorithm may be further improved by adjusting or determining the one or more training settings based on the training data.

According to this disclosure, the one or more training settings may comprise a value of each of one or more hyper-parameters, a loss function, a learning rate, number of epochs, and/or a batch size.

For example, the most common loss function used in regression may be mean squared error, however, if there are a significant number of outliers in the training data, mean absolute error or Huber loss may be better than mean squared error.

Additionally or optionally, the method 2000 may further comprise determining, based on the training data, metadata associated with the training data; selecting, among a plurality of predefined preprocessing algorithms, at least one preprocessing algorithm based on the metadata associated with the training data; and processing the training data using the at least one selected preprocessing algorithm. Said training of the ML algorithm is based on the processed training data.

According to this disclosure, metadata associated with the training data may comprise means of creation of the data, the purpose of the data, time and date of creation, creator or author of the data, location on a computer network where the data was created, standards used, file size, data quality, source of the data, and/or process used to create the data.

For example, a digital image may include metadata that describes the size of the image, its color depth, resolution, when it was created, the shutter speed, and other data. A text document's metadata may contain information about how long the document is, who the author is, when the document was written, and a short summary of the document. Information included in the metadata of an audio file may include artist, album, track title, genre, album artwork, track number, and/or other information for identifying the content.

According to this disclosure, the plurality of predefined preprocessing algorithms may comprise data augmentation, data filtering, and/or data synthesis to increase the database and to provide more examples for training.

Additionally or optionally, after obtaining the training data based on the storage path, the method 2000 may further comprise visualizing one or more examples of the obtained training data, e.g., via a user device 1110, 1120, 1130, and 1500, and determining, based on the use case, whether the one or more examples of the obtained training data is appropriate for training the ML algorithm. If the one or more examples of the obtained training data is not appropriate for training the ML algorithm, the method 2000 may further comprise obtaining new training data representing the use case and/or storing the newly collected training data in a database such as the database 1300 of FIG. 1.

Additionally or optionally, the method 2000 may further comprise selecting, among a plurality of predefined features associated with the training data, at least one feature for said training of the ML algorithm; determining, based on the training data, the at least one selected feature. Said training of the ML algorithm is based on the at least one determined feature.

For example, the at least one feature may comprise Mel-frequency cepstral coefficients and/or Mel-spectrogram for audio data. Training the ML algorithm using features extracted from the training data may facilitate deploying the ML algorithm on a resource-limited computing platform.

Additionally or optionally, after determining the at least one selected feature, the method 2000 may further comprise visualizing the at least one selected feature, e.g., via a user device 1110, 1120, 1130, and 1500, and determining, based on the use case, whether the at least one selected feature is appropriate for training the ML algorithm. If the at least one selected feature is not appropriate for training the ML algorithm, the method 2000 may further comprise selecting, among the plurality of predefined features associated with the training data, at least one further feature for said training of the ML algorithm; determining, based on the training data, the at least one selected further feature.

Additionally or optionally, after determining the at least one selected feature, the method 2000 may further comprise determining, based on the at least one selected feature, one or more feature vector, and said training of the ML algorithm is based on the one or more feature vector.

For example, for audio data, features associated with the audio data may be extracted from an audio database. The features associated with the audio data may be selected from a list of pre-defined features or implemented by a user writing/loading respective pre-defined program codes for extracting the features. After extracting the features, one or more of the most important features may be selected using a selection algorithm based on feature statistics between classes of a given use case.

Additionally or optionally, the one or more configuration requirements may further comprise a minimum target performance of the ML algorithm. The method 2000 may further comprise determining a performance of the selected ML algorithm; and selecting, among the plurality of predefined ML algorithms, a further ML algorithm, if the performance of the selected ML algorithm is worse than the minimum target performance of the ML algorithm.

For example, after training the ML algorithm, one or more performance of the ML algorithm may be determined based on one or more inference data during an inference. The one or more determined performance of the ML algorithm may be visualized, e.g., via a user device 1110, 1120, 1130, and 1500, and compared with a respective minimum target performance of the ML algorithm.

Additionally or optionally, the method 2000 may further comprise providing the ML algorithm to a device for deployment.

For example, after determining the ML algorithm based on the one or more configuration requirements by the server 1200 of FIG. 1, the determined ML algorithm may be provided to any one or more of the user device 1110, 1120, 1130, and 1500 for deployment.

Additionally or optionally, the ML algorithm may be of a specific format, e.g., .json. For example, after determining the ML algorithm based on the one or more configuration requirements, the method 2000 may comprise packing the ML algorithm into a desired format and providing the packed ML algorithm to a device for deployment. For example, the device for deployment may run a signal processing flow and the ML algorithm is a component of the flow, e.g., as a component for classification.

According to various examples, the ML model metadata of the determined ML algorithm and/or the at least one selected feature (or feature vector) may be also provided to the device for deployment.

Additionally or optionally, the method 2000 may further comprise obtaining, from the user, an instruction indicating the device for deployment, and said providing of the ML algorithm is based on the instruction.

For example, the user may send the instruction, via a user device 1110, 1120, 1130, and 1500, to the server 1200 to instruct the server 1200 to provide the ML algorithm to any one or more of the user device 1110, 1120, 1130, and 1500 for deployment. The instruction may comprise an address or identifier of the user device for the deployment.

According to various examples, the device for deployment may be a unit implemented for a dedicated processing environment (e.g., cloud, PC, embedded) that performs inference (e.g., feature extraction and model fit) of the ML algorithm within, a signal processing flow, e.g., an audio processing signal flow. I.e., the ML algorithm is a component of the signal processing flow. The device for deployment may receive an audio stream to be processed by the ML algorithm. The device for deployment may further, according to the ML model metadata associated with the ML algorithm, extract the required features. Using input audio stream and extracted features, the device for deployment may perform inference and output either a categorical output (e.g., control signal) like signaling when a sound of an emergency siren is present, or an edited/filtered audio stream like no-noised speech signals.

Additionally or optionally, the ML algorithm may comprise a plurality of neural networks, and the method 2000 may further comprise serializing the plurality of neural networks based on the one or more configuration requirements.

The method 2000 speeds up and improve a process of modeling data by determining and deploying an appropriate ML algorithm for the data based on one or more configuration requirements associated with the ML algorithm. It enables experimentation (e.g., setting up the best combination of features and models for a given use case), fast prototyping (e.g., user-friendly interface and wizard providing an intuitive tool to do processing and to train ML algorithms), and easy deployment (e.g., trained ML algorithms are automatically transformed and sent to, e.g., a signal flow for real-time inference). In addition, deployed ML algorithms are tailored for a target environment, e.g. cloud, microcontroller, and so on. For environments with limited computational capabilities like embedded systems, trained ML algorithms are tailored for a given use case in order to optimize/adjust their size and processing requirements and thus make them affordable in terms of MIPS and memory consumption.

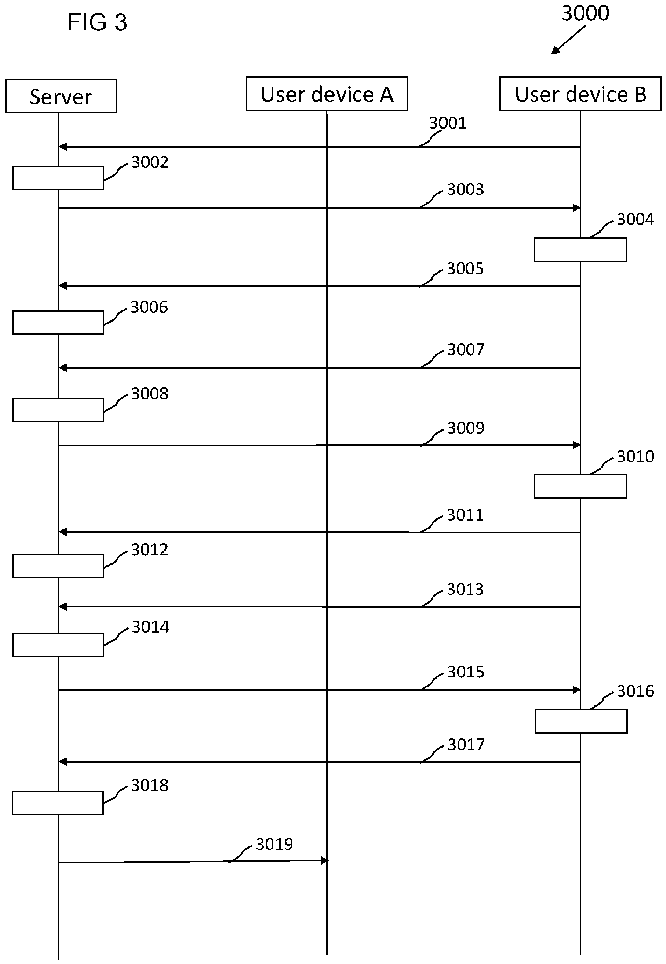

FIG. 3 is an exemplary workflow according to various examples. The workflow may be performed using the method 2000. The workflow is an exemplary workflow for determining an ML algorithm for processing audio data.

At 3001, a user inputs, via a user device B, one or more configuration requirements associated with an ML algorithm.

For example, the one or more configuration requirements may comprise loading a specific ML algorithm from the server to a user device A. Based on the one or more configuration requirements, the server transmits the ML algorithm to the user device A.

As a further example, the one or more configuration requirements may comprise creating a ML algorithm for a use case. The workflow for creating the ML algorithm are describes below in detail

At 3002, the server loads an audio database, and at 3003, provides an interface for the user to manage the audio database via the user device B.

At 3004, one or more examples of the audio data is visualized to the user via the user device B.

At 3005, the user instructs, via the user device B, the server to perform pre-processing of the audio data, and at 3006, the server performs pre-processing of the audio data.

At 3007, the user selects, via the user device B, features to be extracted from the audio data, and at 3008, the server extracts the selected features.

At 3009, the server transmits the extracted features to the user device B, and at 3010, the user device B visualizes the extracted features to the user.

If the extracted features are not appreciate for training the ML algorithm, the workflow goes to 3007.

If the extracted features are appreciate for training the ML algorithm, the workflow goes to 3011.

At 3011, the user instructs, via the user device B, the server to determine/create feature vectors based on the extracted features, and at 3012, the server processes accordingly.

At 3013, the user instructs, via the user device B, the server to determine/select the ML algorithm to be trained using the features vectors, and at 3014, the server performs the training of the ML algorithm.

At 3015, the server provides the trained ML algorithm and a performance of the trained ML algorithm to the user device B, and at 3016, the user device visualizes the trained ML algorithm and the performance to the user.

If the performance of the selected ML algorithm is worse than a minimum target performance of the ML algorithm, the workflow goes to 3013 to select a new ML algorithm and the previously trained ML algorithm is discarded.

If the performance of the selected ML algorithm is equal to or better than the minimum target performance of the ML algorithm, the workflow goes to 3017.

At 3017, the user instructs, via the user device B, the server to transmits the trained ML algorithm to a device for deployment. For example, the device for deployment can be either the user device A or the user device B.

At 3018, the server packs the trained ML algorithm and transmits the packed ML algorithm to the user device A at 3019.

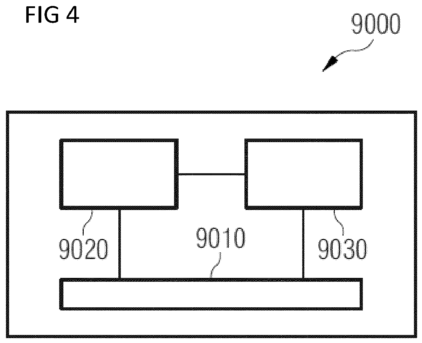

FIG. 4 is a block diagram of a computing device 9000 according to various examples. The computing device 9000 may comprise a processor 9020, a memory 9030, and an input/output interface 9010. The processor 9020 is configured to load program code from the memory 9030 and execute the program code. Upon executing the program code, the processor 9020 performs the method 2000 for determining one or more ML algorithms based on one or more configuration requirements associated with the one or more ML algorithms obtained from a specific user.

For example, the computing device 9000 may be the server 1200 of FIG. 1, i.e., the method 2000 may be executed in a system with a client-server architecture. Alternatively, the computing device 9000 may be any one of the client/user devices 1110, 1120, 1130, and 1500, i.e., the method 2000 may be executed by a standalone computing device.

According to this disclosure, a system comprising a user interface and a computing device is disclosed. A user inputs, via the user interface, one or more configuration requirements associated with a ML algorithm. The computing device is configured to obtain the one or more configuration requirements from the user interface and to determine the ML algorithm based on the one or more configuration requirements.

For example, the system may comprise the server 1200 of FIG. 1 and any one of the client/user devices 1110, 1120, 1130, and 1500, on which the user interface runs.

Alternatively, the system may comprise a standalone computing device, e.g., any one of the server 1200, the client/user devices 1110, 1120, 1130, and 1500. The user interface runs on the standalone computing device.

According to various examples, the computing device may be the computing device 9000 configured to perform the method 2000.

Summarizing, techniques have been described that speeds up and improve a process of modeling data by determining and deploying an appropriate ML algorithm for the data based on one or more configuration requirements associated with the ML algorithm. They enables experimentation (e.g., setting up the best combination of features and models for a given use case), fast prototyping (e.g., user-friendly interface and wizard providing an intuitive tool to do processing and to train ML algorithms), and easy deployment (e.g., trained ML algorithms are automatically transformed and sent to, e.g., a signal flow for real-time inference). In addition, deployed ML algorithms are tailored for a target environment, e.g. cloud, microcontroller, and so on. For environments with limited computational capabilities like embedded systems, trained ML algorithms are tailored for a given use case in order to optimize/adjust their size and processing requirements and thus make them affordable in terms of MIPS and memory consumption.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A computer-implemented method (2000), comprising:
- obtaining (2100), from a user, one or more configuration requirements associated with a machine-learning, ML, algorithm;
- determining (2200) the ML algorithm based on the one or more configuration requirements.

2. The computer-implemented method (2000) of claim 1, wherein the one or more configuration requirements comprises a target use case and said determining of the ML algorithm comprises:
- selecting, among a plurality of predefined ML algorithms, the ML algorithm based on the target use case.

3. The computer-implemented method (2000) of claim 2, wherein the one or more configuration requirements further comprises a configuration of a computing platform for executing the ML algorithm, the method further comprising:
- determining an architecture of the ML algorithm based on the configuration of the computing platform;
wherein said selecting of the ML algorithm is further based on the architecture of the ML algorithm.

4. The computer-implemented method (2000) of claim 2 or 3, wherein the one or more configuration requirements further comprises a storage path associated with training data, the method further comprising:
- obtaining the training data based on the storage path;
- training the ML algorithm based on the training data.

5. The computer-implemented method (2000) of claim 4, further comprising:
- determining, based on the training data, one or more training settings for said training of the ML algorithm;
wherein the one or more training settings comprises a value of each of one or more hyper-parameters, and/or a loss function and said training of the ML algorithm is further based on the one or more training settings.

6. The computer-implemented method (2000) of claim 4 or 5, further comprising:
- determining, based on the training data, metadata associated with the training data;
- selecting, among a plurality of predefined preprocessing algorithms, at least one preprocessing algorithm based on the metadata associated with the training data;
- processing the training data using the at least one selected preprocessing algorithm; wherein said training of the ML algorithm is based on the processed training data.

7. The computer-implemented method (2000) of any one of claims 4 to 6, further comprising:
- selecting, among a plurality of predefined features associated with the training data, at least one feature for said training of the ML algorithm;
- determining, based on the training data, the at least one selected feature;
wherein said training of the ML algorithm is based on the at least one determined feature.

8. The computer-implemented method (2000) of any one of claims 2 to 7, wherein the one or more configuration requirements further comprises a minimum target performance of the ML algorithm and the method further comprises:
- determining a performance of the selected ML algorithm;
- selecting, among the plurality of predefined ML algorithms, a further ML algorithm, if the performance of the selected ML algorithm is worse than the minimum target performance of the ML algorithm.

9. The computer-implemented method (2000) of any one of the preceding claims, the method further comprising:
- providing the ML algorithm to a device for deployment.

10. The computer-implemented method (2000) of claim 9, further comprising:
- obtaining, from the user, an instruction indicating the device for deployment;
wherein said providing of the ML algorithm is based on the instruction.

11. The computer-implemented method (2000) of any one of the preceding claims, wherein the ML algorithm comprises a plurality of neural networks, the method further comprising:
- serializing the plurality of neural networks based on the one or more configuration requirements.

12. A computing device (9000), the device (9000) comprising a processor (9020) and a memory (9030), wherein upon loading and executing program code from the memory (9030), the processor (9020) is configured to perform the method (2000) of any one of the preceding claims.

13. A system (1000), comprising:
- a user interface, wherein a user inputs, via the user interface, one or more configuration requirements associated with a machine-learning, ML, algorithm;
- a computing device (9000), wherein the computing device (9000) is configured to obtain the one or more configuration requirements from the user interface and determine the ML algorithm based on the one or more configuration requirements.

14. The system (1000) of claim 13, wherein the computing device (9000) is configured to perform the method (2000) of any one of claims 2 to 11.

15. A computer program product or a computer program or a computer-readable storage medium includes program code being executed by at least one processor, wherein upon executing the program code, the at least one processor is configured to perform the method (2000) according to any one of claims 1-11.
